# EUROPEAN PATENT APPLICATION

(11) **EP 2 045 298 A2**
(43) Date of publication of application: **08.04.2009**
(21) Application number: 08017186.1
(22) Date of filing: 30.09.2008
(51) Int. Cl.: C09C 1/46, C01B 31/04

(54) **Pelletized graphite obtaining process**

(30) Priority: 03.10.2007 BR 706103
(71) Applicant: NACIONAL DE GRAFITE LTDA., Itapecerica MG (BR)
(72) Inventor: Vespúcio, Helvécio, Alves, Itapecerica MG (BR)
(74) Representative: PROPI, S.L.

(57) **Abstract**

Process for the production of pelletized graphite.

## Description

This invention relates to an obtaining process for pelletized graphite from graphite, and pelletized graphite obtained by this process. More specifically, this invention relates to the obtaining process for pelletized graphite, also called natural graphite, from graphite or graphite-based dry or graphite-based wet, in any form, including pellets, flakes or grains.

The obtaining process for pelletized graphite from graphite or graphite-based dry or graphite-based wet, according to this invention, comprises the steps of adding graphite and a binder in a reactor, moisture homogenization, adding water, product pelletizing, finishing and drying. Alternatively, the referred process can include the steps of grading and packaging size.

The binder is just a vehicle to allow thin graphite, with low ash content, reach the metal bath without loss, resulting in a high yield. Thus binder is used, usually before the pelletizing stage, when the cohesion forces, such as particle cohesion, valence forces, recrystallization or Van der Waals forces between the particles are considered weak. Wide variety of binders, solid or liquid, can be used, especially, carboxy-methyl-cellulose, dextrin, asphalt, starch, cassava starch, bentonite, bitumen, lime, cement, molasses, metassilicato, sodium silicate, different resins and/or polymers. The binder should be low cost, nontoxic, have long life, be not hygroscopic, have low levels of sulfur and nitrogen, do not raise the volatile content in the pelletized graphite above certain values.

The pelletized graphite obtained by the process according to this invention can be dried in any type of dryer, like rotary steam dryers or common rotary dryers, wake dryers, fluid bed dryers or similar.

The pelletized graphite obtaining process according to this invention comprises the steps of: a) addition of a binder and graphite in a reactor, b) moisture homogenization, c) adding water to the moisture, d) product palletizing, e) finish and f) drying.

Preferably, the referred process includes the stages of grading and packaging.

More preferably, the referred process includes graphite or graphite-based dry or graphite-based wet.

Even more preferably, at the pelletized graphite obtaining process, the used graphite presents carbon content in a range of 30% and 99.99%.

Usefully, at the referred process, the used graphite presents carbon content in a range of 50% and 90%.

More usefully, at the referred process, the moisture presents graphite weight content in a range of 40 % and 99.99%.

Even more usefully, at the referred process, the moisture presents graphite weight content in a range of 60 % and 90%.

Preferably, the pelletized graphite obtaining process comprises the use of graphite containing particles with less of 50 mesh ASTM size.

More preferably, that process comprises the use of graphite containing particles with less of 40 mesh ASTM size.

Even more preferably, that process involves moisture containing a binder weight in a range of 0.1% and 60%.

Usefully, that process involves moisture containing a binder weight in a range of 1% and 40%.

More usefully, that process involves moisture containing a binder weight in a range of 10% and 30%.

Even more usefully, that process includes a cellulose base binder.

This invention also comprises the pelletized graphite obtained in accordance to the referred process.

Usefully, the palletized graphite presents itself in the form of pellets, flakes or grains.

Below are examples referring to the graphite pelletizing process in order to clarify this invention, which are merely illustrative, not exhaustive.

### EXAMPLE 1

Quantitative Description of the formulation for the graphite-based dry obtaining process:
1, 0 ton of dried graphite,
5 kg of binder and
150 kg of water.
Total: 1.155 kg of pelletized graphite (87% dried)

### EXAMPLE 2

Quantitative Description of the formulation for the graphite-based wet obtaining process:
1,0 ton of wet graphite (90% dried),
5 kg of binder and
50 kg of water.
Total: 1.155 kg of pelletized graphite (87% dried)

### EXAMPLE 3

Quantitative Description of the formulation for the graphite-based dry obtaining process, using a granular mixer:
1,0 ton of dried graphite,
5 kg of binder and
150 kg of water.

### EXAMPLE 4

Quantitative Description of the formulation for the graphite-based wet obtaining process, using a granular mixer:
1,0 ton of wet graphite (90% dried),
5 kg of binder and
50 kg of water.
Total: 1.155 kg of pelletized graphite (87% dried)

### EXAMPLE 5

Quantitative Description of the formulation for the graphite-based dry obtaining process and subsequent drying:
1,0 ton of dried graphite,
5 kg of binder and
150 kg of water.

Adjust the line speed and temperature of dryer for moisture humidity of 0.3%.

### EXAMPLE 6

Quantitative Description of the formulation for the graphite-based wet obtaining process, using a granular mixer:
1,0 ton of wet graphite (90% dried).
5 kg of binder and
50 kg of water.

Adjust the line speed and temperature of dryer for final moisture humidity of 0.2%.

### EXAMPLE 7

Quantitative Description of the formulation for the graphite-based dry obtaining process, drying and subsequent grading:
1,0 ton of dried graphite,
5 kg of binder and
150 kg of water.

Adjust the line speed and temperature of dryer for moisture final humidity of 0.3%.

Sieves boxes are used to achieve the specified size distribution or 95% minimum retained accumulated in 35 mesh ASTM.

### EXAMPLE 8

Quantitative Description of the formulation for the graphite-based wet obtaining process, using a granular mixer, drying and subsequent grading:
1, 0 ton of wet graphite (90% dried),
5 kg of binder and
50 kg of water.

Adjust the line speed and temperature of dryer for moisture final humidity of 0.2%.

Sieves boxes are used to achieve the specified size distribution or 95% minimum retained accumulated in 35 mesh ASTM.

### EXAMPLE 9

Quantitative Description of the formulation for the graphite-based dry obtaining process, using a granular mixer, drying, grading and subsequent palletized graphite packaging:
1, 0 ton of graphite,
5 kg of binder and
150 kg of water.

Adjust the line speed and temperature of dryer for moisture final humidity of 0.3%.

Sieves boxes are used to achieve the specified size distribution or 95% minimum retained accumulated in 35 mesh ASTM.

Package the final palletized graphite using bags containing 10 kg or 20 kg or 25 kg of product (net weight).

### EXAMPLE 10

Quantitative Description of the formulation for the graphite-based wet obtaining process, using a granular mixer, drying, grading and subsequent palletized graphite packaging:
1,0 ton of wet graphite (90% dried),
5 kg of binder and
50 kg of water.

Adjust the line speed and temperature of dryer for moisture final humidity of 0.2%.

Sieves boxes are used to achieve the specified size distribution or 95% minimum retained accumulated in 35 mesh ASTM.

Package the final pelletized graphite using big-bags containing 900 kg or 1000 kg of product (net weight).

## Claims

1. Pelletized Graphite Obtaining Process, wherein there are the following steps: a) addition of a binder and graphite in a reactor, b) moisture homogenization, c) adding water to the moisture, d) product palletizing, e) finish and f) drying.

2. The process of claim 1, comprising grading and packaging steps.

3. The process of claims 1 or 2, comprising graphite-based dry or graphite-based wet.

4. The process of claims 1 to 3, wherein the used graphite presents carbon content in a range of 30% and 99.99%.

5. The process of claim 4, wherein the used graphite presents carbon content in a range of 50% and 90%.

6. The process of claims 4 or 5, wherein the moisture presents a graphite weight content in a range of 40 % and 99.99%.

7. The process of claim 6, wherein the moisture presents graphite weight content in a range of 60 % and 90%.

8. The process of claims 4 to 7, wherein the used graphite contain only particles with less of 50 mesh ASTM size.

9. The process of claim 8, wherein the used graphite contains only particles with less of 40 mesh ASTM size.

10. The process of claims 1 to 9, comprising moisture containing a binder weight in a range of 0.1% and 60%.

11. The process of claim 10, comprising moisture containing a binder weight in a range of 1% and 40%.

12. The process of claims 10 or 11, comprising moisture containing a binder weight in a range of 10% and 30%.

13. The process of claims 1 to 12, wherein the moisture can include a cellulose base binder.

14. Pelletized graphite obtained by the referred process at claims 1 to 13.

15. Pelletized graphite of claim 14, in any form, including pellets, flakes or grains.
